Europäisches Patentamt

European Patent Office

Office européen des brevets

(11) Publication number: **0 302 824**
**A2**

(12) **EUROPEAN PATENT APPLICATION**

(21) Application number: **88810515.2**

(22) Date of filing: **26.07.88**

(51) Int. Cl.⁴: **A 01 N 25/10**
**A 01 C 1/06**

(30) Priority: **03.08.87 US 81202**

(43) Date of publication of application:
**08.02.89 Bulletin 89/06**

(84) Designated Contracting States:
**AT BE CH DE ES FR GB GR IT LI LU NL SE**

�]71 Applicant: **CIBA-GEIGY AG**
**Klybeckstrasse 141**
**CH-4002 Basel (CH)**

(72) Inventor: **Goldenberg, Merril S.**
**626 Kent Avenue**
**Teaneck New Jersey 07666 (US)**

**Kleiner, Eduard K.**
**Hemlock Hill Road**
**Pound Ridge New York 10576 (US)**

**Burkhard, Niklaus**
**Bahnhofstrasse 12**
**CH-4310 Rheinfelden (CH)**

**Nevill, John David, Dr.**
**Rebenstrasse 40**
**CH-4125 Riehen (CH)**

(54) Moisture activated agricultural composition and method.

�) A method for the moisture activated release and transport in soil of a substantially non-volatile, lipophilic biologically active agent having a solubility in water of less than about 0.1% by weight, comprising contacting said soil with a composition containing a biologically effective amount of said active agent entrapped within an association complex of a polycarboxylate polymer and a poly (lower) alkoxylated surfactant, such that upon application of moisture the rate of release and transport of said active agent from said composition is dependent upon (i) the rate of moisture activated dissociation of, and resultant release of said surfactant from, the complex, and (ii) the rate of diffusion of the released surfactant through the moist soil; and compositions for use in said method.

**Description**

## MOISTURE ACTIVATED AGRICULTURAL COMPOSITION AND METHOD

### BACKGROUND OF THE INVENTION

The present invention relates to an improved method for the dispersion of lipophilic biologically active substances of very limited aqueous solubility in soil, and to improved compositions for use in such method. Such compositions may be in the form of films, granulates, beads, etc. or in the form of seed coatings.

The use of polymeric materials for the purpose of retarding the release of water soluble biologically active substances is well known, as seen in U.S. Patent No. 3,975,350 and Canadian Patent No. 911,332, for example. Generally, the active agent diffuses through the polymeric matrix where it is released.

Also, water-soluble adhesives, such as gum arabic, carboxymethylcellulose and alginates have been employed as seed coatings for the release of agricultural chemicals by leaching or volatilization of the chemical from the coated seed, or by dissolution of the adhesive. See, for example, Canadian Patent No. 1,041,788.

However, such systems are generally of little or no use in instances where the active agent possesses little water solubility and is substantially non-volatile.

It is an object of the present invention to overcome the disadvantages associated with such prior art compositions and methods, by entrapping such difficultly soluble active agents in a composition containing an association complex of a polycarboxylate polymer and a poly (lower) alkoxylated surfactant.

It is a further object of the present invention to provide a method for the moisture activated release and transport of such active agents into the soil.

These and other objects of the present invention are apparent from the following specific disclosures.

### DETAILED DESCRIPTION OF THE INVENTION

One embodiment of the present invention relates to the moisture activated release and transport in soil of a substantially non-volatile lipophilic biologically active agent having a solubility in water of less than about 0.1% by weight, comprising contacting said soil with a composition containing a biologically effective amount of said active agent entrapped within an association complex of a polycarboxylate polymer and a poly (lower) alkoxylated surfactant, such that upon application of moisture, the rate of release and transport of said active agent from said composition is dependent upon (i) the rate of moisture activated dissociation of, and resultant release of said surfactant from, the complex, and (ii) the rate of diffusion of the release surfactant through the moist soil.

The active agent may be entrapped within the polymeric association complex as a solid solution or dispersion, or in the form of an encapsulated bead or the like; or the active agent may be admixed with an inert filler or absorbant carrier which is blended with the polymer association complex to form one or more active agent containing depots within the polymeric complex.

The active agent may be in the form of a solid or liquid. If the active agent is a solid, it may be dissolved in an inert diluent, or employed as a powder or the like to facilitate entrapment and diffusion within the polymeric association complex.

Suitable active agents for use in the present invention are those which possess a solubility in water less than about 0.1% by weight, preferably between about 1000 and about 0.1 parts per million by weight in water, more preferably between about 500 and 1 part per million by weight in water.

The active agents selected for use in connection with the present invention are generally sufficiently lipophilic such that their solubility, or dispersibility in the form of surfactant micelles, in an aqueous solution containing the poly (lower) alkoxylated surfactant having a concentration of surfactant in water greater than the critical micelle concentration of such surfactant is at least about 50% greater than the solubility of such active agents in the absence of the surfactant, preferably at least 100% greater, more preferably at least 300% greater and most preferably at least 500% greater than the solubility of such surface active agents in the absence of such surfactant.

Conveniently, as most conventional poly (lower) alkoxylated surfactants have a critical micelle concentration less than 500 parts per million by weight surfactant in water, one useful test in determining desirable lipophilic active agent and surfactant combinations is to employ candidate poly (lower) alkoxylated surfactant concentrations between about 100 and about 5000 parts per million by weight and measure the apparent solubility (i.e. solubility or surfactant/agent micelle dispersions) of the active agent in such concentrations as compared to the solubility of such agent in water, at about 20° C. For superior surfactant/active agents combinations the apparent solubility of the active agent is increased by at least 50% by weight or more at a surfactant concentration between about 500 and 5000 parts per million, preferably as low as 100 parts per million.

The biologically active agent may be a biocide, such as an insecticide, acaricide, nematicide, rodenticide, herbicide, fungicide or bactericide, or a chemosterilant, repellent, pheromone, plant growth regulator, gene expression inducer, nutrient or fertilizer or a mixture thereof. The biologically active agents for use in the present invention belong to a known class of substances, used for example in the agricultural field. Preferably the active agent or agents are organic or organometallic substances, and include compounds such as organophosphonic compounds, halocarbons, nitrophenols and derivatives thereof, amidines, carbamates, thiocarbamates, ureas, thioureas, pyrethrins, pyrethroiods, ethers, esters, and the like.

By substantially non-volatile in connection with the active substance is meant that the rate of release of the active agent from the association complex is due primarily to the rate of dissociation of the surfactant from the association complex and the subsequent rate of diffusion of surfactant through the moist soil and not due to vapor pressure effects associated with the active agent.

Preferred active agents are biocides, and highly preferred are pesticides, especially insecticides, and fungicides. Also preferred are plant chemosterilants.

Especially preferred commercially available pesticides and fungicides include terbufos, isazofos, diazinon, carbofuran, chloroneb, furathiocarb, carboxin, tolclofos-methyl and captan.

The amount of active agent entrapped within the composition can vary widely, depending upon the desired effect, the nature of the active agent employed and the release rate characteristics desired. In general, however, the amount of active agent can vary between about 0.01 and about 500 g per kilogram of total composition, preferably between 0.1 and about 500 g per kilogram of total composition, more preferably between about 1 and about 100 g per kilogram and most preferably between about 1 and about 50 g per kilogram of total composition, i.e. inclusive of inert carriers, seeds, if any, and the like.

Inert fillers, pH adjusting adjuvants and absorbant carriers which may be present in the composition, for example, to prevent a sticking together of composition particulates or beads, to assure reliable bulk density, to adjust the particle size to a given ratio, to adjust the pH of the composition to modify the dissociation and surfactant release characteristics, or as depots for the active agent include, inter alia, inorganic or organic particulate or pulverized materials, such as for example, pulverized rock, highly dispersed silicic acid, pulverized polymerizates or pulverized plant constituents. Suitable such materials include, for example, attapulgite, bentonite, pumice, calcite, dolomite, gypsum, lime, kaolin, montmorillonite, sand, sepiolite, talcum, vermiculite, brick powder, wood flour, peat, etc. or mixtures thereof. When present, the fillers, adjuvants and/or carriers may constitute between about 0.01 to about 80 percent of the composition.

In one embodiment of the invention, the method employs a composition which also incorporates plant seeds. Preferably,the plant seeds are coated with the composition containing the active agent entrapped within the association complex, optionally in combination with the aforementioned fillers, adjuvants and/or carriers. Seeds of both dicotyledonous and monocotyledonous plants may be employed. Preferred seeds include vegetable and cotton seeds, and especially cereal grains.

A further embodiment of the present invention relates to moisture activated compositions which contain the active agent entrapped within the association complex and are useful in the aforementioned methods. Specifically, this embodiment relates to moisture activated compositions containing a substantially non-volatile, lipophilic biologically active agent having a solubility in water of less than about 0.1% by weight entrapped within an association complex of a polycarboxylate polymer and a poly (lower) alkoxylated surfactant, such that upon application of moisture, the rate of release and transport of said active agent from said composition is dependent upon (i) the rate of moisture activated dissociation of, and resultant release of said surfactant from the complex, and (ii) the rate of diffusion of the released surfactant through the moist soil.

In a subembodiment of the invention, the composition incorporates a plant seed, e.g. by coating the seed with such composition.

As mentioned above, such compositions may also include one or more fillers, adjuvants and/or carriers in the amounts specified.

The association complex generally contains a blend of polymeric carboxylic acid where the carboxylate is predominately in the free acid (i.e. -COOH) form with the poly (lower) alkoxylated surfactant in a weight ratio of about 1:10 to about 10:1, perferably from about 1:4 to 4:1. The presence of the free acid groups allows the acid hydrogen to be hydrogen bonded to the ether groups present in the poly (lower) alkoxylated surfactant thereby resulting in complex formation. By "lower" is meant that the alkoxy groups contains 2-4 carbon atoms, desirably 2-3 carbon atoms or mixtures thereot.

Preferably, the poly (lower) alkoxylated surfactant is one in which alkoxylated surfactant is one in which the alkoxy groups are primarily ethoxy moieties. Most preferably, the surfactant is a poly-ethoxylated surfactant.

Also, in general, the poly (lower) alkoxylated surfactant should possess sufficient water-solubility such that the surfactant, upon gradual release from the complex upon moisture activated dissociation, diffuses through the moist soil, thereby carrying active agent from the composition into the soil at a predetermined rate.

In order to transport the active agent through the soil, the surfactant should be sufficiently lipophilic such that it can solubilize the active agent as mentioned above, and be sufficiently hydrophilic so as to diffuse through the moist soil effectively. Desirably, the poly (lower alkoxylated surfactant has an HLB (hydrophile-lipophile balance) value between 10 and 40. Also, especially preferred are such surfactants which are predominately devoid of highly ionic moieties, such as acid salts or quaternary ammonium groups, although such surfactants may be advantageously employed in minor amounts in conjunction with poly (lower) alkoxylated surfactants devoid of such moieties.

3

**0 302 824**

The polymeric carboxylic acid which may be employed in accordance with this invention may generally be described as an acidic polymeric material in which the acidity is provided by free carboxyl groups. Such polymeric materials and methods for their preparation are well known in the art. Included among such acidic materials are synthetic polymers as well as natural polymers such as alginic acid, pectic acid and cellulose glycolic acid. An illustrative but by no means exhaustive listing of suitable polymeric carboxylic acid components include homopolymers of unsaturated carboxylic acids such as acrylic acid, methacrylic acid, and the like; copolymers of monocarboxylic acids of the acrylic series with one or more polymerizable vinyl or vinylidene compounds such as vinyl halides, vinyl acetate, vinyl benzoate, acrylonitrile, methacrolein, styrene, vinyl toluene, methyl methacrylate, ethyl acrylate, vinyl methyl ketone, vinyl methyl ether, t-butylacrylamide, N-dimethylacrylamide, and the like; or hydrolyzed copolymers of alpha, beta-ethylenically unsaturated dicarboxylic acid anhydrides, e.g. maleic anhydride with one or more terminally unsaturated mono-olefins such as ethylene, propylene, isobutylene, diisosobutylene, chloroprene, and the like; or with cyclic terpenes such as dipentene; or with vinyl or vinylidene compounds such as vinyl halides, vinyl sters, vinyl ethers, vinyl ketones, styrene, acrylic acid and its esters, methacrylic acid and its esters, and the like. Detailed descriptions of polymerizable vinyl, vinylidene and related compounds and the preparation of their copolymers known in the art are discussed in Vinyl and Related Polymers by Calvin E. Schildknecht, 1952, published by John Wiley & Sons, Inc.

It will be understood that the polymeric carboxylic acid which may be employed in accordance with this invention may also be prepared by carboxyalkylation of polymers containing a multiplicity of hydroxyl groups such as polyvinyl alcohol, partially hydrolyzed polyvinyl acetate, cellulose and its derivatives, dextran and its derivatives, and the like; and by hydrolysis of polymers containing a multiplicity of acrylamide or acrylonitrile groups such as polyacrylamide, polyacrylonitrile, and the like in the presence of an alkaline catalyst. Carboxyalkylation of hydroxyl groups can be accomplished by methods well known to the art such as by reaction with chloroacetic acid in the presence of alkali, or by reactions with acid anhydrides derived from dicarboxylic acids such as phthalic anhydride, maleic anhydride, succinic anhydride, and the like to form half esters. Furthermore, the derivatives of any of the aforementioned polymers wherein a fraction of the carboxylic acid groups are reacted to form derivatives thereof such as partial amide by treatment with ammonia and organic amines, and partial esters by treatment with lower alkyl alcohols may also be used. It is essential, however, that a minimum of 10% carboxylic acid groups be retained by the latter derivatives. In addition, the monomers and the resulting polycarboxylic acid in accordance with this invention may likewise be substituted by one or more other groups such as, halide, hydroxy, ester, ether, alkyl, aryl, phenoxy, alkylphenoxy, dialkylamino, perfluoroalkyl, perfluoroalkoxyperfluoroalkyl, polysilanylalkyl, thiol and the like. Other polymeric carboxylic acids in accordance with the invention may include a polycarboxylic acid ether having aliphatic chains alternating with and connected by ether oxygen to residues of a pentanoic acid as described in U.S. Pat. No. 3,300,444, and a carboxy polymethylene hydrocolloid based on the acrylic and methacrylic acid form of polymer containing 0.75 to 2% by weight of polyalkenyl polyether as a crosslinking agent as disclosed specifically in U.S. Pat. No. 2,909,462. As previously noted, the overall composition of the polycarboxylic acid component is not critical, provided that at least 10% of the monomer units contain free carboxylic acid groups.

Preferred polymeric carboxylic acid components include polyacrylic acid, polyacrylic acid crosslinked with approximately 1% of polyallyl sucrose, polymethacrylic acid, polymaleic acid, polyitaconic acid, polyhydroxybenzoic acid, polygalacturonic acid, polyglutamic acid, polyglycollic acid, polylactic acid, ethylene/acrylic acid copolymer, ethylene/methacrylic acid copolymer, methyl methacrylate/methacrylic acid copolymer, methyl acrylate/methyl methacrylate/methacrylic acid terpolymer, ethyl acrylate/t-butyl acrylamide/acrylic acid terpolymer, methy vinyl ether/maleic acid copolymer, vinyl acetate/crotonic acid copolymer, butadiene/maleic acid copolymer, polymaleic anhydride, acrylonitrile/maleic anhydride copolymer, butadiene/maleic anhydride copolymer, ethylene/maleic anhydride copolymer, 1-hexene/maleic anhydride copolymer, 1-octadecene/maleic anhydride copolymer, methyl vinyl ether/maleic anhydride copolymer, n-octadecyl vinyl ether/maleic anhydride copolymer, styrene/maleic anhydride copolymer, vinyl acetate/maleic anhydride copolymer, cellulose acetate phthalate, carboxymethyl cellulose, and carboxyl modified polyacrylamide.

Preferably, the polymeric carboxylic acid should have a minimum of 10%, and preferably about 20%, and still more preferably above 50% of the monomer units comprising carboxylic acid groups. In general, the average molecular weight of the polymeric carboxylic acid to be employed may range from about 1,500 to 4,000,000 and higher.

The poly (lower) alkoxylated, preferably ethoxylated surfactants contemplated for use in the systems of this invention include ethoxylated alkylphenols, ethoxylated mono- and poly-hydroxy aliphatic alcohols, ethoxylated fatty amines, ethoxylated fatty acid amides and ethanolamides, ethoxylated fatty acids, ethoxylated fatty acid esters, ethoxylated sorbitan fatty acid esters, ethoxylated sorbitol esters, ethoxylated vegetable oils, ethoxylated lanolin derivatives, ethoxylated sugar derivatives, ethoxylated naphthalene derivatives, ethoxylated mercaptans, ethoxylated polypropylene glycols, ethoxylated fatty glycerides, ethoxylated fatty glycol esters, ethoxylated sucroglycerides, and the like. The applicable ethoxylated nonionic surfactants may be primary, secondary, tertiary, saturated, unsaturated, linear or branched in structure. The backbone and pendant chain of the said surfactants may be substituted in part by one or more other groups such as halide, hydroxyl, ester, ether, alkyl, aryl, phenoxy, alkylphenoxy, dialkylamino, perfluoroalkyl, perfluoroalkoxyalkyl, silicone, silane, thiol and the like, e.g. the compositions disclosed in U.S. Patent Nos. 2,915,554 and 4,171,282. Other ethoxylated nonionic surfactants applicable herein include perfluoroalkyl

4

polyurethane surfactants as disclosed in U.S. Patent No. 4,046,944. The foregoing illustrative listing of applicable ethoxylated nonionic surfactants is by no means exhaustive of the surfactants which can be used, it being required of applicable surfactants that the ethylene oxide content be sufficiently large to enable them to behave in the manner of a nonionic surfactant. Detailed descriptions of ethoxylated nonionic surfactants and processes for their preparation known to the art are discussed in Nonionic Surfactants, edited by M.J. Schick, 1970, published by Marcel Dekker, Inc., and in Surfactants and Interfacial Phenomena by M.J. Rosen, 1978, published by John Wiley & Sons, Inc., such teachings being incorporated by reference herein.

Preferred surfactants include octylphenoxy polyethoxy ethanols, nonylphenoxy polyethoxy ethanols, ethoxylated sorbitan monolaurates, ethoxylated sorbitan monopalmitates, ethoxylated sorbitan monostearates, ethoxylated sorbitan monooleates, ethoxylated sorbitan tristearates, ethoxylated sorbitan trioleates, ethoxylated oleyl amides, ethoxylated tallow amides, ethoxylated glycol laurates, ethoxylated glycol stearates, ethoxylated glycol oleates, ethoxylated stearic acid, ethoxylated oleic acid, ethoxylated rosin fatty acids, ethoxylated lauryl ethers, ethoxylated cetyl ethers, ethoxylated stearyl ethers, ethoxylated oleyl ethers, ethoxylated tridecyl ethers, ethoxylated polydimethylsiloxanes, ethoxylated polypropylene glycols, ethoxylated polyurethanes, and ethoxylated perfluoroalkyl polyurethanes.

Within the preferred embodiments of this invention, the ethoxylated surfactants contemplated should comprise a minimum of 2 and preferably at least 5 ethylene oxide units and have HLB (hydrophile-lipophile balance) values between 10 and 40 and preferably between 11 and 20. The HLB system identifies the lipophilic and hydrophilic character of surfactants and is fully described in a bulletin distributed by ICI Americas Inc. Surfactants with HLB values less than 10 are generally insoluble in water, while those with HLB values greater than 10 are generally water soluble. In general, the average molecular weight of the ethoxylated nonionic surfactant to be employed may range from about 150 to 4,000 and preferably up to 3,500.

The process of forming the association complex involves blending the indicated polymeric carboxylic acid and poly (lower) alkoxylated surfactant under conditions and subsequent treatment as explained hereinafter as determined by the end use requirements of the systems. Thus, since the complexes so formed are relatively insoluble in water, it is preferred to dissolve the polymeric carboxylic acid and ethoxylated surfactant in separate solvents or water-solvent mixtures (which can be the same solvent or different but miscible solvents) in the desired concentration, and subsequently to add one solution to the other such that a solution of the complex is formed from which useful carriers for the moisture controlled release of active agents can be prepared. The solution of the said blend can also be prepared by dispersing the polymeric carboxylic acid in a nonsolvent or solvent-nonsolvent mixture, followed by mixing the resulting dispersion with a miscible or soluble poly (lower) alkoxylated surfactant. Depending upon the nature of the components in the blend, the applicable solvents and nonsolvents contemplated include alcohols such as methanol, ethanol, isopropanol, and the like; alkylene glycols such as ethylene glycol, propylene glycol, and the like; monoalkyl ethers of alkylene glycols such as monomethyl ether or ethylene glycol, and the like; aliphatic and aromatic hydrocarbons such as hexane, toluene, and the like; halogen substituted aliphatic and aromatic hydrocarbons such as methylene chloride, carbon tetrachloride, chlorobenzene, and the like; ketones such as acetone, methyl ethyl ketone, and the like; esters such as ethyl acetate, butylacetate, and the like; and water, dioxane, formamide, dimethyl formamide, dimethyl sulfoxide, and the like. When a water-solvent or solvent-nonsolvent mixture is involved, the amount of solvent employed should be at least sufficient to prevent precipitation of the blend. Preferably, at least about 20%, based on the total mixture weight, of solvent is employed. If desired, the active agent and optional excipients may be added during the blending procedure.

Within the preferred embodiment of this invention the homogeneous blend of a polymeric carboxylic acid, with a minimum of 10%, and preferably above 20%, and still more preferably 50% of the monomer units comprising carboxylic groups, and a nonionic surfactant, with a minimum of 2 and preferably at least 5 ethylene oxide units and with HLB values between 10 and 40 and preferably between 11 and 20, should have a component weight ratio ranging at least from about 1:10 to 10:1 and preferably from 1:4 and 4:1 and most preferably an optimum range from 2:3 to 3:2. The optimum solids content in the solution of said blend is readily determined by routine experimentation according to the viscosity requirements in the intended fabrication process, such as coating or extrusion. The temperature at which the polymer blend is formed can range from 10° C to 130° C and is preferably at an ambient or room temperature of about 20-25° C. The blend so formed, after evaporating the solvent by air-drying or under reduced pressure, is generally homogeneous, totally amorphous, thermoplastic, rubbery, and distinctly different from the parent components with respect to physical state, flexibility, glass transition temperature, and permeability to active agents. In every instance, the homogeneous blend of a brittle, solid polymeric carboxylic acid and a liquid or paste ethoxylated nonionic surfactant results in a rubbery, thermoplastic polymer having a low and adjustable glass transition temperature which exhibits adjustable permeabilities for various active agents. The extent of change in properties of the blend from those of the starting components cannot be accounted for from simple mixing alone. Without wishing to be bound by a theory of operation, the probable mechansim by which the variation in property is achieved is through an intermolecular complex formation between the polymeric carboxylic acid and the ethoxylated nonionic surfactant in the solid phase. This is manifested by the observation that when an ethoxylated nonionic surfactant is blended with the aqueous solution of the polymeric carboxylic acid, an immediate increase in viscosity is observed which eventually results in the gelation of the mixture.

The polymer blends of this invention are generally soluble in an alkaline metal hydroxide solution with pH above about 4.5. However, upon drying the said solution by air or under reduced pressure, a phase separation

5

between the polymeric carboxylic acid salt and the ethoxylated ] nonionic surfactant would result if the polymeric carboxylic acid is neutralized to the extent that less than about 10% of the monomer units comprise free carboxylic acid groups. Thus, the presence of free carboxylic acid groups is essential in the association of a polymeric carboxylic acid and poly (lower) alkoxylated surfactant in the solid state. As previously noted, the overall composition of the polymeric carboxylic acid component is not critical to the formation of polymeric blends providing it contains a minimum of 10%, preferably above 20%, and still more preferably at least 50% of the monomer units as carboxylic acid groups.

The polymer system of the present invention is not limited to blends of a single polymeric carboxylic acid and a single ethoxylated nonionic surfactant. In fact, one or more polymeric carboxylic acids and one or more ethoxylated nonionic surfactants within the preferred embodiment of this invention can be utilized to form the blend. In addition, the active agent and other compatible additives such as dyestuffs, pigments, plasticizers, UV-stabilizers, organic and inorganic fillers and active agent carriers including amorphous silica, bentonite and the like and water soluble or insoluble synthetic and natural polymers including polyvinyl alcohol, methyl cellulose, carboxymethyl cellulose, sodium alginate, carrageenan, and the like can be used in forming the polymer system of the present invention to improve the appearance, stability, solvent resistance, and properties of the resulting articles.

The polymer complex as indicated above may be prepared in combination with the active agent, and optionally fillers and/or carriers in situ, or alternatively, the polymer complex may be prepared, in the presence or absence of said fillers and carriers, and the resulting composition slurried in an organic solution of active agent, to absorb or load the composition, usually in the form of beads or granulates, with an effective amount of the active agent. The loaded beads or granulates can subsequently be dried to obtain the desired product, e.g. by heating the same, optionally under reduced pressure, to drive off the organic solvent. Suitable solvents include those referred to above.

Highly preferred carboxylate polymers include especially polyacrylic acid. Most preferred poly (lower) alkoxylated surfactants include the polyethoxylated $C_5$-$C_{12}$ alkylphenols, most preferably the octyl- and nonyl-phenols having 5 to 20, preferably 8 to 12 ethylene oxide units, or mixtures thereof. The preferred ratio of polyacrylic acid to polyethoxylated alkylphenol is generally between about 4:1 and 1:4, most preferably 3:2 to 2:3. The polyacrylic acid molecular weight is preferably between about 1,500 and about 250,000, more preferably about 3,000 to 50,000 and especially about 4,000 to about 6,000.

For the coating of seeds with the composition, the polymer complex can advantageously be dissolved or dispersed in a solvent and applied to the seeds by methods known per se, such as by spraying the polymer system into a rotating drum or plate containing the seeds. The inert fillers and/or carriers can be sprayed on together with the polymer system or subsequent to the polymer spraying. If the active agent or their formulations are solid, they can be introduced together with the inert filler. Where the active agent is liquid, or dissolved in a solvent, it may be added to the polymer system prior to or during spraying or first absorbed onto a carrier which is introduced, e.g. while spraying the polymer complex system onto the seeds.

The formulation specifics may be modified depending upon the desired release and transport rate of active agent desired, simply by modifying the rate at which the surfactant is released and diffused through the soil environment. For example, the dissociation rate of the complex can be generally retarded by decreasing the pH of the composition. For example, to retard dissociation, pH adjusting agents may be used to coat the composition or incorporated therein; or added to the soil. Similarly, the rate of diffusion may be adjusted by varying the molecular weight or lipophile-hydrophile balance of the surfactant employed. Thus, a high molecular weight surfactant may generally diffuse in soil at a slower rate than a lower molecular weight surfactant. Thus, the rate of moisture activated dissociation and diffusion of surfactant and the resulting diffusion of active agent may be controlled so as to release the active agent from a period of between about 1 hour to 6 months or more.

The following examples are for illustrative purposes only and are not intended to limit the scope of the invention. All parts are by weight unless otherwise specified.

The following shows the general preparation of surfactant solutions with active agent and the subsequent analysis of biocide solubilization.

Preparation of Surfactant Solutions:

Stock solutions of surfactants in distilled deionized water (pH 5.6) are prepared and used over a 1-2 month period. One of two methods of preparation are used: a) 0.1 g surfactant is weight into a 10-ml flask and diluted to 10 ml with water. This 10,000 ppm solution is subsequently diluted to obtain 5000, 1000, 500, 100 and 10 ppm solutions or b) 0.1 g surfactant is diluted to 100 ml with water. Two milliliters of the surfactant solution is then pipetted into a 20-ml vial.

Addition of Active Agent:

2 μl of active agent (~ 0.0020-0.0025 g) is then injected into each vial with a syringe, and samples are agitated by hand during the course of the day (~ 8 hours) and are let to stand at room temperature overnight (except as specifically indicated otherwise).

Analysis:

After approximately 24 hours, 1-ml samples are then taken and centrifuged (Eppendorf microcentrifuge, model 5412, approximately 10K rpm, rcf ~ 6Kxg, radius ~ 6 cm) in 1.5 ml polypropylene microcentrifuge tubes for 5 minutes. These examples are then analyzed by Gas Liquid Chromatography (GLC), except as specifically indicated otherwise.

The surfactants studied can be found in the following two tables titled Surfactants and Their Properties.

Table        Surfactants and Their Properties: Nonionic Surfactants

| Code | Trade Name | | HLB Value | CMC Value (ppm) | Chemical Composition |
|------|------------|--|-----------|-----------------|----------------------|
| N1 | Triton | N57 | 10.0 [7] | – | $C_9H_{19}$—⟨O⟩—$(OCH_2CH_2)_xOH$  X=5[3] |
| N2 | | N60 | 10.9 [3] | 13 | X=6[3] |
| N3 | | N101 | 13.4 [7] | 29 | X=9-10[3] |
| N4 | Triton | X-114 | 12.4 [7] | – | $CH_3-C-CH_2-C$—⟨O⟩—$(OCH_2CH_2)_xOH$  X=7-8[3] (with $CH_3$ groups) |
| N5 | Pluronic | L101 | 1.0 [6] | 5.5 | $HO(CH_2CH_2O)_a(CHCH_2O)_b(CH_2CH_2O)_cH$ [6] with $CH_3$ |
| N6 | | L121 | 5.0[1],0.5[6] | 7.6 | |
| N7 | | 17R4 | 12[1] | – | |
| N8 | | 10R5 | 15[1] | – | |
| N9 | | F127 | 22[6] | 16 | |
| N10 | | F88 | 28[6] | – | |
| N11 | | F68 | 29[6] | – | |
| N12 | Ethofat | 0/20 | 12.0[13] | – | $R-\overset{O}{\overset{\|}{C}}-O(CH_2CH_2O)_xH$   R = alkyl from oleic acid [2] |
| N13 | | 60/20 | 12.6[13] | – | R = alkyl from stearic acid [2] |
| N14 | Ethomid | HT/15 | 13.5[13] | – | $R-\overset{O}{\overset{\|}{C}}-N\overset{(CH_2CH_2O)_xH}{\underset{(CH_2CH_2O)_yH}{}}$   R = alkyl from hydrogenated tallow acid [2] |
| N15 | | HT/60 | 19.0[13] | – | R = alkyl from hydrogenated tallow acid [2] |
| N16 | | 0/15 | 14.0[13] | – | R = alkyl from oleic acid [2] |
| N17 | PEG 600 Distearate | | 10.6[4] | 220 | PEG monoester $R\overset{O}{\overset{\|}{C}}-O-(CH_2CH_2O)_xH$[4] |
| N18 | PEG 1540 Monostearate | | 17.3[4] | – | |
| N19 | PEG 1540 Distearate | | 14.8[4] | – | PEG diester $R\overset{O}{\overset{\|}{C}}-O(CH_2CH_2O)_x-\overset{O}{\overset{\|}{C}}R$[4] |
| N20 | Monolaurate | | 17.6[4] | – | R = alkyl from lauric, stearic or oleic acid[4] |
| N21 | Dilaurate | | 15.7[4] | – | X = 5-180 |
| N22 | Monooleate | | 17.0[4] | – | |
| N23 | Dioleate | | 15.0[4] | – | |
| N24 | Tween 80 | | 15.0[5] | 35 | polyoxyethylene 20 sorbitan monooleate[5] |
| N25 | Renex 36 | | 11.4[5] | – | polyoxyethylene (6) tridecyl ether[5] |
| N26 | Tergitol 15-S-9 | | 13.5[1], 13.3[9] | – | linear alcohol $C_{11}$ to $C_{15}$ plus polyethylene oxide (9 units) [9] |

Footnotes:

1 McCutcheon's, 1984.
2 Armak Product Bulletin No. 72-13.
3 "Triton Surface Active Agents Bulletin".
4 Armak Bulletin 76-14.
5 "General Characteristics of Atlas Surfactants" Bulletin Copyright 1960.
6 "The Pluronic Grid" – 8th Edition – BASF Wyandotte Bulletin.
7 Rhom & Haas Surfactants – "Handbook of Physical Properties".
8 GAF Chemical Catalog 1976.
9 Union Carbide Bulletin on Tergitol Surfactants – 1972.
10 GAF, Anionic Surfactants Technical Bulletin 9655-031.
11 GAF, Surfactants Bulletin, 2303-051.
12 GAF, verbal communication.
13 Armak Bulletin – "Physical and Chemical Characteristics of Armak Ethoxylated Aliphatic Chemicals", 85-10.

Table

Surfactants and Their Properties:  Ionic Surfactants

| Code | Trade Name | HLB Value | CMC Value (ppm) | Chemical Composition |
|------|-----------|-----------|-----------------|----------------------|

**Cationic**

$$R-N \Big\langle \begin{array}{l} (CH_2CH_2O)_xH \\ (CH_2CH_2O)_yH \end{array}$$

| Code | Trade Name | HLB Value | CMC (ppm) | R |
|------|-----------|-----------|-----------|---|
| C1 | Ethomeen T/12 | 13.9[1],9.8[13] | – | R = alkyl from tallow fatty acid[2] |
| C2 | T/15 | 14.9[1,13] | 41 | " |
| C3 | T/25 | 19.3[13] | 14 | " |
| C4 | C/15 | 13.9[1],17.9[13] | – | R = alkyl from coco fatty acid[2] |
| C5 | C/25 | 19.3[13] | 80 | " |
| C6 | 18/15 | 10.0[13] | – | R = alkyl from stearic acid[2] |
| C7 | 18/20 | – | – | " |
| C8 | 18/25 | 19.4[13] | – | " |

| C9 | Ethoduomeen T/13 | 10.1[13] | – |  |

$$R-N-(CH_2)_4N \Big\langle \begin{array}{l} (CH_2CH_2O)_xH \\ (CH_2CH_2O)_yH \end{array} \qquad | \atop (CH_2CH_2O)_2H$$

R = alkyl from tallow fatty acid [2]

**Anionic**

$$C_nH_{2n+1}-\langle O \rangle-O-(CH_2CH_2O)_m-SO_3^- Y^+; \quad n=9,\ m=4;\ Y=NH_4 \quad [10,12]$$

| Code | Trade Name | HLB Value | CMC (ppm) | Chemical Composition |
|------|-----------|-----------|-----------|----------------------|
| A1 | Alipal CO-436 | ~30[12] | 53 | |
| A2 | CO-433 | | – | n=9, m=4, Y=Na [10,12] |
| A3 | SE 463 | | – | n=8, m=3, Y=Na [11,12] |
| A4 | EP 110 | | – | n=9, m=9, Y=NH4 [11,12] |
| A5 | EP 115 | | – | n=9, m~15, Y=NH4 [1,12] |
| A6 | EP 120 | | – | n=9, m=20, Y=NH4 [11,12] |

**Amphoteric**

| Code | Trade Name | HLB Value | CMC (ppm) | Chemical Composition |
|------|-----------|-----------|-----------|----------------------|
| AM1 | Antaron PC-37 | – | 110 | Sulfated fatty polyoxyethylene quaternary nitrogen compound[8] |

Footnotes:

1  McCutcheon's, 1984.
2  Armak Product Bulletin No. 72-13.
3  "Triton Surface Active Agents Bulletin".
4  Armak Bulletin 76-14.
5  "General Characteristics of Atlas Surfactants" Bulletin Copyright 1960.
6  "The Pluronic Grid" - 8th Edition - BASF Wyandotte Bulletin.
7  Rhom & Haas Surfactants - "Handbook of Physical Properties".
8  GAF Chemical Catalog 1976.
9  Union Carbide Bulletin on Tergitol Surfactants - 1972.
10  GAF, Anionic Surfactants Technical Bulletin 9655-031.
11  GAF, Surfactants Bulletin, 2303-051.
12  GAF, verbal communication.
13  Armak Bulletin - "Physical and Chemical Characteristics of Armak Ethoxylated Aliphatic Chemicals", 85-10.

## Example 1

This example shows the increase in biocide solubilization with increasing surfactant concentration.

| Surfactant | | Surfactant Concentration | Solubility (ppm) | |
|---|---|---|---|---|
| Code | Trade Name | (ppm) | | |
| N4 | Triton X-114 | | Terbufos | Diazinon[1] |
| | | 0 | ~14 | ~26 |
| | | 100 | 41 | 34 |
| | | 500 | 100 | 85 |
| | | 1000 | 220 | 140 |
| C2 | Ethomeen T/15 | | | |
| | | 10 | 31 | - |
| | | 100 | 60 | 50 |
| | | 500 | 120 | 150 |
| | | 1000 | 180 | 240 |
| | | 5000 | 310 | - |

[1] These samples are frozen and thawed before analysis.

Similar trends are shown for the non-ionic surfactants N3 (Triton N101). N18 (PEG 1540 monostearate) and N24 (Tween 80).

## Example 2

This example contrasts the ability of various surfactants to solubilize terbufos.

Example 2

This example contrasts the ability of various surfactants to solubilize terbufos.

| Surfactant | Type | Surfactant Concentration (ppm) | Solubility (ppm) |
|---|---|---|---|
| N3 (Triton N101) | Nonionic | | |
| | | 10 | 15 |
| | | 100 | 41 |
| | | 500 | 110 |
| | | 1000 | 190 |
| N9 (Pluronic F127) | Nonionic, Poloxamer ABA | 10 | 2.2 |
| | | 100 | 4.4 |
| | | 500 | 5.5 |
| | | 1000 | 6.5 |
| C2 (Ethomeen T/15) | Cationic | 10 | 31 |
| | | 100 | 60 |
| | | 500 | 120 |
| | | 1000 | 180 |
| A6 (Alipal EP 120) | Anionic | 100 | 0.9 |
| | | 500 | 1.8 |
| | | 1000 | 1.2 |

As shown above, non-ionic (except those of the poloxamer type) and cationic surfactants greatly enhance the solubility of terbufos while those of the anionic type do not.

Example 3

The following Table indicates a decreasing trend in active agent solubilization with increase in surfactant HLB. The surfactants included cover a broad range: nonionic (excluding poloxamers), cationic and anionic. The active agent employed in this example is terbufos. Experimental Note: This study is performed at 1000 ppm surfactant concentration and thus excludes those surfactants with HLB less than approximately 11 which are too insoluble in water.

| Code | Surfactant Trade Name | HLB Value | Terbufos Conc. (ppm) |
|------|----------------------|-----------|---------------------|
| N4 | Triton X114 | 12.4 | 220 |
| N3 | Triton N101 | 13.4 | 190 |
| C4 | Ethomeen C/15 | 13.9 | 100 |
| N26 | Tergitol 15-S-9 | 13.9 | 140 |
| C2 | Ethomeen T/15 | 14.9 | 180 |
| N24 | Tween 80 | 15.0 | 76 |
| N21 | PEG 1540 Dilaurate | 15.7 | 190 |
| N22 | "    "    Monooleate | 17.0 | 7.5 |
| N18 | "    "    Monostearate | 17.3 | 15.0 |
| N20 | "    "    Monolaurate | 17.6 | 19.0 |
| N15 | Ethomid HT/60 | 19.0 | 5.2 |
| C5 | Ethomeen C/25 | 19.3 | 14.0 |
| C3 | "       T/25 | 19.3 | 49.0 |
| A1 | Alipal CO-436 | ∿30 | 9.7 |

## Example 4

This example compares the solubility of terbufos in a variety of neat surfactants (no water present), polyethylene glycols and aqueous surfactant solutions. Procedure (non-aqueous): 5 μl of terbufos is injected into 200 μl of surfactant (or PEGs) in a vial and solubility judged by eye. Superscripts above the code indicate solubility within an aqueous surfactant environment (+ = high enhancement, - = low enhancement).

Result:

Soluble
Cationic - Cl, C2[+], C4[+], C7; Anionic - Al[-],
Non-ionic - N1, N4[+], N5[-], N6[-], N8[-], N12, N24[+], N25, N26[+];
PEG 200, PEG 400

Insoluble:
Anionic - A2[-], A3[-], A5[-], A6[-]
The above neat surfactant results are consistent with the notion of the lipophilic material (e.g. terbufos) being insoluble in an extremely polar (i.e. high dielectric constant, ionic charges) environment with surfactant A1 being an exception. Thus in an aqueous surfactant environment, the lipophilic material (e.g. terbufos) is solubilized within a relatively non-polar micelle but not within an extremely polar micelle e.g. anionic. The non-ionic poloxamers N5, N6, N8 do not form conventional micelles and presumably can contain a high water

**0 302 824**

concentration (i.e. polar environment) -this leads to poor solubilization. The PEG 200 and 400 do not form micelles and hence are poor solubilizers in an aqueous environment.

Example 5

This example shows the effect of combining solubility enhancing (N3 and C2) and non-solubility enhancing surfactants on the solubilization of terbufos. Experimental Note: Individual surfactant solutions (1000 ppm) are prepared from 10 ml portions and combinations are prepared from 5 ml portions (1000 ppm) of each component. Approximately 1 μl terbufos is injected into each 10 ml solution (i.e. maximum 100 ppm in solution).

## Terbufos Concentration (ppm)

| Individual Surfactant | | | Combination Surfactant | |
|---|---|---|---|---|
| | | | With N3 | With C2 |
| N3 | 65 | | - | 64 |
| C2 | 12 | | 64 | - |
| N7 | 1.1 | | 54 | 6.7 |
| N8 | 1.2 | | 40 | 39 |
| N10 | 0.7 | | 38 | 36 |
| N11 | 0.5 | | 24 | 9.5 |
| A2 | 2.0 | | 13 | 38 |
| A4 | 3.4 | | 28 | - |

As shown above, the solubilizing ability of a poorly enhancing surfactant solution can be increased by addition of an enhancing surfactant.

Example 6

This example compares the solubilization of the biocide diazinon in a variety of aqueous surfactant solutions (1000 ppm).

13

| | Code | HLB | Solubility (ppm) |
|---|---|---|---|
| | $H_2O$ | - | 26 |
| | N3 | 13.4 | 406 |
| | C2 | 14.9 | 312 |
| | N24 | 15.0 | 220 |
| | C3 | 19.3 | 92 |
| | A1 | ∿30 | 68 |
| | A2 | ∿30 | 140 |
| | A4 | ∿30 | 73 |
| Poloxamers | N7 | 12 | 53 |
| | N8 | 15 | 60 |
| | N10 | 28 | 61 |
| | N11 | 29 | 64 |

As shown above, excluding the poloxamers, there is a general trend in the decrease of diazinon solubility with increase in HLB. The non-ionic N3 (Triton N101) has a 14-fold enhancement over the aqueous solubility, similar to that shown for terbufos. The permanently charged anionic and amphoteric surfactants have a much lower, e.g. one to twofold, enhancement (A2 is an exception) as do the poloxamers which have a onefold enhancement. Note that the enhancement using the poloxamers and anionics are larger than in the terbufos case, possibly because diazinon is more polar than terbufos.

<u>Example 7</u>

This example compares the solubilization of the biocide furathiocarb in a variety of aqueous surfactant solutions (1000 ppm). Experimental Note: 5 μl of furathiocarb (∿ 0.0060-0.0070 g) is pipetted into 10 ml aqueous solutions and stirred overnight. Analysis is performed by UV spectroscopy.

| Solution | | Solubility of Furathiocarb, ppm |
|---|---|---|
| | H$_2$O | 15 |
| 1000 ppm | Triton N101 | 220 |
| " | Ethomeen T/15 | 89 |
| " | Pluronic F68 | 15 |
| " | Alipal EP 110 | 16 |
| " | Alipal CO-433 | 25 |

As shown above, Triton N101 and Ethomeen T/15 solutions show a large enhancement in the solubility of the furathiocarb, with 14- and 5-fold increases respectively, while the poloxamer and anionic solutions show minimal, if any, enhancement. These results are consistent with those obtained for terbufos and diazinon.

## Example 8

This example compares the solubilization of the biocide isazophos in a variety of aqueous solutions (1000 ppm).

| Code | HLB | Solubility (ppm) |
|---|---|---|
| H$_2$O | – | 62 |
| N3 | 13.4 | 260 |
| N24 | 15.0 | 170 |
| N18 | 17.3 | 130 |
| N9 | 22 | 130 |
| N11 | 29 | 92 |
| A1 | ~30 | 84 |
| A2 | ~30 | 58 |
| A4 | ~30 | 180 |
| A5 | ~30 | 11 |
| AM1 | – | 98 |

As shown above, (including the poloxamers N9 and N11) there is a general trend in the decrease of isazophos solubility with increase in HLB. The non-ionic N3 (Triton N101) leads to a threefold enhancement over the aqueous solubility, which is less than that shown for terbufos, diazinon and furathiocarb. This may be explained by the higher polarity and aqueous solubility of isazophos. The twofold enhancement of A4 and onefold for N9 may be due to specific polar interactions.

## Example 9

This example compares the solubilization of the biocide carbofuran in a variety of aqueous surfactant solutions (1000 ppm). Experimental Note: 0.01 g carbofuran is added to 10 ml aqueous solutions and stirred overnight. Analysis is performed by UV spectroscopy.

| Solution | Solubility of Carbofuran, ppm |
|---|---|
| $H_2O$ | 330 |
| 1000 ppm Triton N101 | 370 |
| " " Ethomeen T/15 | 436 |
| " " Pluronic F68 | 287 |
| " " Alipal EP110 | 349 |

As shown above, there is only a small enhancement in the solubility of carbofuran in surfactant solutions over that in water - Triton having a 10% and Ethomeen T/15 having a 30% increase. This is consistent with the notion, as shown with diazinon, of lower surfactant aided solubility enhancement with increased water solubility of the biocide.

## Example 10

This example compares the solubility of terbufos in water with increasing concentration of the following three materials:

a) Surfactant N3 (Triton N101), b) an aqueous solution made from an association polymer of a 1:1 weight ratio of polyacrylic acid MW 5000 and N3 and c) similar to b) but with a polyethylene glycol 2000 instead of a surfactant.

Procedure:

Approximately 200 mg terbufos plus 20 ml water (distilled, deionized) are vortex mixed in a 40 ml stoppered glass centrifuge tube. A 1-ml aliquot is removed from this terbufos saturated solution and is replaced by 1 ml of surfactant or association polymer solution to increase its concentration. The vortex mixing, sampling and replacement steps are repeated. After all samples are obtained and left standing overnight, they are microcentrifuged approximately 5 minutes. Terbufos concentration of each sample is then determined by gas chromatography.

| Concentration (ppm) Surfactant or Association Polymer | Concentration of Terbufos (ppm) in Aqueous Solution | | |
|---|---|---|---|
| | a) Surfactant N3 (Triton N101) | b) Association Polymer with N3 | c) Association Polymer with PEG 2000 |
| 0 | ND | ND | ND |
| 5 | 1 | | |
| 10 | 1 | | |
| 14 | 1 | | |
| 19 | 1 | | |
| 38 | 2 | | |
| 56 | 2 | 2 | |
| 73 | 3 | 3 | |
| 119 | 7 | 3 | |
| 163 | - | 5 | |
| 255 | 2 | 13 | |
| 342 | 11 | 10 | |
| 575 | 64 | 15 | |
| 796 | 150 | 30 | |
| 1007 | 220 | 38 | |
| 1206 | - | 52 | |
| 1396 | - | 58 | 2 |

ND = None Detected (< 1 ppm)

**0 302 824**

As shown above, the increasing concentration of the surfactant (column a) or the increasing concentration of the association complex made with surfactant (column b) lead to an increase in the aqueous solubilization of terbufos. Also, similar solubilization of terbufos is found at approximately equal N3 surfactant concentrations formed from pure surfactant a) or from association polymer b) - for example, at 575 ppm surfactant a), terbufos concentration is 64 ppm while at 603 ppm surfactant portion b) (from half of 1206 ppm 1:1 association polymer), terbufos concentration is 52 ppm.

Example 11

This example shows the effect of initial pH on the rate of dissociation dissolution of an association polymer sheet (1:1 wt. ratio of polyacrylic acid MW 5000 and Triton N101).

Procedure:

Fifteen grams of the polymer sheet are weighed into a 200 ml 3-neck round bottom flask immersed in a 20°C water bath. Exactly 150 ml of an aqueous solution at a given pH are added and the mixture rapidly stirred. At the time intervalsd indicated below, 5-ml aliquots are removed, centrifuged (IEC HN-5, 1500 rpm) for several minutes to remove insoluble polymer and the concentration of the polymer in solution determined by UV analysis (272 nm phenyl absorption).
Note: pH 1 = 0.1 N HCl, pH 5.5 = distilled deionized water; pH 11 = 5.3 g $Na_2Co_3$/500 ml water.

18

| Time (Hour) | Concentration of Association Polymer (mg/ml) | | | | | |
|---|---|---|---|---|---|---|
| | pH = 1 | (sol$^n$ pH) | pH = 5.5 | (sol$^n$ pH)[1] | pH = 11 | (sol$^n$ pH)[1] |
| 0.25 | 0 | (1) | 7.2 | (3.5) | 26.5 | (4.5) |
| 0.5 | 0 | | 11.6 | (3.5) | 47.5 | (4) |
| 1 | 0.3 | | 18.1 | (3) | 70.4 | (3.5) |
| 1.5 | - | | 21.9 | | - | |
| 2 | - | | - | | 82.6 | |
| 2.5 | 0.3 | | - | | - | |
| 3 | - | | 26.9 | | - | |
| 3.5 | - | | - | | 92.6 | |
| 6 | 0.6 | | - | | 97.6 | |
| 17 | - | | 31.3 | | - | |
| 23 | 0.6 | | - | | 104.6 (all dissolved) | |
| 24 | - | - | 29.9 | | - | - |
| 115 | - | - | 43.9 | | - | - |

[1] Note: The drop in solution pH with time in the unbuffered solutions.

As shown above, the rate of dissociation and dissolution of the association polymer sheet increases with increase in pH. At very low pH (= 1) there is little dissolution, one reason being that the polyacrylic acid is fully protonated and hydrogen bonded with the ethoxylated surfactant. At the higher initial pH (= 5.5) the decrease to pH 3 significantly retards the dissolution rate in contrast to that within the decrease from pH 11 to about 3.5 where there is complete dissolution.

## Example 12

This example compares the time release of terbufos from coated seeds comprised of association polymer (1:2 PA 5000: Triton N101) and the standard polymer PVAc (Polyvinyl acetate, Vinamul R83007, Vinyl Products Ltd, GB).

100 g buffer is weighed into an 8 oz. jar containing a small vial with a magnetic stirrer (allowing continual circulation of buffer but no contact with seeds). Approximately 10 g of coated maize kernels (~ 1% by weight terbufos) is then added, jar capped and stirring commenced. Samples are taken at various time intervals and replaced with the appropriate buffer. These samples are then microcentrifuged 5 minutes and the supernatant analyzed for terbufos by GLC. Note: All Triton N101 released corresponds to a concentration of 1335 ppm with PVAc and 1869 without PVAc.

## Time Release from Coated Seeds
### Terbufos Concentration (ppm)

| Time (Hour) | PVAc Buffer pH=5.6 | Association Polymer+PVAc | | | Association Polymer (no PVAc) Buffer pH = 5.6 |
|---|---|---|---|---|---|
| | | Buffer pH=3.3 | 5.6 | 8.3 | |
| 0.5 | ND | N.D. | 130 | 210 | 370 |
| 2 | ND | 22 | 147 | 240 | 350 |
| 4 | 1.9 | 7.6 | 210 | 260 | 360 |
| 26 | 2.4 | - | 163 | - | - |
| 69.5 | ND | - | 122 | - | - |

N.D. = None Detected
Buffers: pH 3.3: 0.1 Molar citric acid monohydrate + 0.2 Molar dibasic sodium phosphate
pH 5.6: 0.1 Molar sodium acetate/acetic acid
pH 8.3: 0.2 Molar sodium hydroxide + 0.2 molar tris acid maleate ***UNBEKANNTER*BEFEHL*KORREK-TUR***

As shown above, in the presence of association polymer (i.e. with surfactant) terbufos is released from the coated seed such that its aqueous solubility is 10 to 25 times that of its solubility in distilled water. With the PVAc coated seed, little terbufos is released. Also, as shown with the association polymer coated seed (+ PVAc), the rate of terbufos release increases with increase in pH over the pH range 3.3 to 8.3.

## Example 13

This example shows the release of terbufos from coated granules made from corn cobs. The granules contain 2% associated polymer (1:1 Triton N101: polyacrylic acid) and 5% terbufos by weight with respect to weight of granules. Three trials are performed using approximately 1 g of granules each time, but varying the amount of surround buffer (sodium acetate/acetic acid pH 5.6). Trials are performed using 100, 20 and 10 g of buffer thereby adjusting the Triton N101 concentration (if all is released immediately) in the surrounding buffer to 100, 500 and 1000 ppm respectively. The apparatus used is similar to that used in the seed study, however 100 and 50 ml beakers (also smaller magnets and vials) are substituted for the 8 oz. jar when releasing into 20 and 10 grams of buffer. Samples (1 ml for the 10 and 20 g of buffer and 2 ml for the 100 g of buffer) are taken at various time intervals and replaced with the corresponding amount of buffer, microcentrifuged and analyzed for terbufos by GLC.

| Time (Hours) | Terbufos Concentration (ppm) | | |
| --- | --- | --- | --- |
| | Buffer = 100 ml (Triton = 100 ppm) | Buffer = 20 ml (Triton = 500 ppm) | Buffer = 10 ml (Triton = 1000 ppm) |
| 0.25 | 2.7 | - | - |
| 0.5 | 3.2 | 53 | 61 |
| 1 | 3.3 | 39 | 86 |
| 1.5 | 4.3 | - | - |
| 2 | 4.7 | - | 104 |
| 3 | 4.6 | 34 | 81 |
| 4 | 5.9 | 44 | 60 |
| 5 | 5.5 | 51 | 60 |
| 6 | 5.1 | - | - |
| 7 | 6.7 | - | - |
| 22 | - | 29 | - |
| 28 | 7.5 | - | - |

As shown above, terbufos can be released into a surrounding aqueous medium from association polymer coated granules. Also, as the surrounding buffer volume is decreased, the amount released increases. This is consistent with a higher concentration of surfactant appearing in a smaller volume of aqueous medium.

EXAMPLE 14

This example demonstrates the dissociation of a wide variety of association polymer coatings (on Mylar) and the transport of the surfactant component through water-saturated sand. The amount of surfactant released is monitored by surface tension measurements.

Preparation of Coating (1:1 Polyacrylic Acid: Surfactant)

The various components are combined with distilled deionized water, or with solvent or their mixtures, vigorously mixed until homogeneous, knife-coated (Gardner, wet laydown 15-50 mils thick) on Mylar and oven dried by gradually increasing temperature from room temperature to 50°C over several hours (dry thickness 0.1-0.2 mm). The compositions used are listed below.

| Association Polymer | Composition of Components in Solution Before Drying | |
|---|---|---|
| | Component | Wt. % in Solution |
| 1. | PA 5000 | 33.73 |
| | Alipal CO436 | 33.79 |
| | Water | 32.48 |
| 2. | PA 5000 | 26.67 |
| | Antaron PC37 | 26.70 |
| | Water | 46.63 |
| 3. | PA 5000 | 33.74 |
| | Ethomeen C/25 | 33.77 |
| | Water | 32.50 |
| 4. | PA 5000 | 25.50 |
| | Ethomeen T/15 | 25.48 |
| | Isopropanol | 24.46 |
| | Water | 24.56 |
| 5. | PA 5000 | 25.21 |
| | Ethomeen T/25 | 25.21 |
| | Isopropanol | 24.85 |
| | Water | 24.28 |
| 6. | PA 5000 | 20.10 |
| | PEG 600 Distearate | 20.13 |
| | Isopropanol | 40.41 |
| | Water | 19.36 |
| 7. | PA 5000 | 12.10 |
| | Pluronic F127 | 12.00 |
| | Water | 75.90 |

| Association Polymer | Composition of Components in Solution Before Drying | |
| --- | --- | --- |
| | Component | Wt. % in Solution |
| 8. | PA 5000 | 33.76 |
| | Pluronic L101 | 33.73 |
| | Water | 32.51 |
| 9. | PA 5000 | 18.37 |
| | Triton N101 | 19.98 |
| | Water | 61.65 |
| 10. | PA 5000 | 29.15 |
| | Tween 80 | 29.18 |
| | Water | 41.67 |
| 11. | PA 300,000 | 16.22 |
| | Ethomeen C/25 | 17.54 |
| | Isopropanol | 17.58 |
| | Water | 48.66 |
| 12. | PA 300,000 | 16.21 |
| | Triton N101 | 16.24 |
| | Isopropanol | 18.91 |
| | Water | 48.63 |
| 13. | Styrene Maleic Anhydride | 15.27 |
| | Triton N101 | 15.19 |
| | Acetone | 69.55 |

*65*

## Surface Tension Measurements(24 + 2°C)

Critical micelle concentrations (CMC) of each surfactant are obtained with a Fisher Autotensiomat® (duNoüy ring) and with a Kruss Digital Tensiometer K10T (Wilhelmy plate). The CMC curves are found to be unaffected by dissolved polyacrylic acid (at equal concentration to surfactant).

From each association polymer coating on Mylar a 1x2-cm rectangular chip is cut and placed at the bottom of a 4.5-cm diameter round beaker, coating side upward. Sand (Fisher Scientific Ottawa Sand, 20-30 mesh, washed in acetone and water and dried) is added onto the chip to form an even layer 0.6-cm deep, then approximately 30 ml of water is carefully poured to a height of 2.4 cm above the chip. The tension at the water surface is then continually monitored with the Kruss tensiometer probe plate and recorded. The beaker's environment is kept humid to prevent evaporation of water from the solution surface. The initial surface tension is usually 50-60 dyne/cm instead of 72 dyne/cm expected of pure water (some washing of the chip while pouring water in) and measurements are made for as long as 48 hours or until CMC is reached. After, the chip is removed and inspected.

Each recording of surface tension versus time is compared to the appropriate CMC curve to generate a record of concentration versus time.

## Results of Surfactant Transport Study

Using the surface tension study, it is found that there is an exponential rise in surface concentration of surfactant (to the CMC) with time. In the table below are listed for each association polymer coating, the CMC, the time to reach CMC and the erosion facility of the chip (i.e. how much of the coating is dissolved off the chip).

| Association Polymer | CMC (% Surfactant) | Time to Reach CMC (Hour) | Erosion Facility[1] |
|---|---|---|---|
| 1 | $5.3 \times 10^{-3}$ | 8 | good |
| 2 | $1.1 \times 10^{-2}$ | 31 | moderate |
| 3 | $8.0 \times 10^{-3}$ | 40 | good |
| 4 | $4.1 \times 10^{-3}$ | >>48 | poor |
| 5 | $1.4 \times 10^{-3}$ | 24 | good |
| 6 | $2.2 \times 10^{-2}$ | >48 | poor |
| 7 | $1.6 \times 10^{-3}$ | 16 | good |
| 8 | $5.5 \times 10^{-4}$ | ~100 | poor |
| 9a) 0.6 cm sand | $2.9 \times 10^{-3}$ | 15 | good |
| b) no sand | | 3 | – |
| c) 1.8 cm sand | | >>24 | – |
| 10 | $3.5 \times 10^{-5}$ | 18 | good |
| 11 | $8.0 \times 10^{-3}$ | >48 | poor |
| 12 | $2.9 \times 10^{-3}$ | 40 | poor |
| 13 | $2.9 \times 10^{-3}$ | >>48 | very poor |

1 good = no coating remaining; poor = much of coating still remaining

As shown above, each particular association polymer has its own characteristic dissociation features and its surfactant component a characteristic diffusion time through the water-saturated sand to the water surface.

The barrier effect of sand on the transport of surfactant is shown by polymer 9. The addition of 0.6 cm of sand slows the rate of upward transport by a factor 4, while tripling the amount of sand slows the rate to an undetectable level after 24 hours.

The following features appear to retard the rate of dissociation from Mylar: a) increase in PA from MW 5000 to 300,000 b) replacing PA 5000 by styrene maleic anhydride c) inclusion of a poorly water soluble surfactant e.g. see 6 and 8. Note: Variation in polymer coating processing, e.g. drying step, can lead to differences in dissociation properties.

Example 15

This example shows the effect of soil (Ardsley, New York, U.S.A.) on the dissociation of various association polymers coated on Mylar.

Rectangular coated sheets (14-23 cm²) are placed coating side up in perforated bottom aluminum weighing

**0 302 824**

pans and planted 1/2 inch underground into already wet soil. They are then watered for approximately one minute and left 4 days with intermittent rainfall (4 hours total). The soil pH is determined to be approximately 6. Samples are removed and the uncoated side rinsed free of soil with water and the samples dried at 50°C overnight. Loose soil is then removed with a soft brush and the coatings examined (see table below).

| Sample # | Association Polymer Composition | Wt. Polymer[2] | Area Sample, cm² | Sample Appearance After 4 days in Soil[3] |
|---|---|---|---|---|
| 1 | 48% PA 5000, 52% Triton N101 | 0.1243 | 23 | coating dissolved completely |
| 2 | 50% PA 300,000, 50% Triton N101 | 0.1461 | 19 | " |
| 3 | 50% styrene maleic anhydride, 50% Triton N101 | 0.0235 | 14 | coating mostly intact |
| 4 | 50% " " , 50% Triton N101 | 0.0183 | 17 | " |
| 5 | 50% PA 5000, 50% Triton N60 | 0.0463 | 14 | coating dissolved completely |
| 6 | 48% PA 300,000, 52% Ethomeen C/25 | 0.1949 | 12 | trace coating left |
| 7 | 50% PA 5000 , 50% Tween 80 | 0.1648 | 21 | coating dissolved completely |
| 8 | 50% , 50% Alipal CO436 | 0.1817 | 15 | " |
| 9 | 50% , Pluronic F127 | 0.0627 | 15 | " |
| 10 | 50% , 50% PEG 600 Distearate | 0.0357 | 15 | trace coating left |
| 11 | 50% , 50% Ethomeen T/15 | 0.0551 | 16 | " |
| 12 | 50% , 50% Ethomeen T/25 | 0.0333 | 20 | coating dissolved completely |
| 13 | 50% , 50% Pluronic L121 | 0.0546 | 15 | coating mostly intact |
| 14 | 50% PA 300,000, 50% Pluronic L101 | 0.0839 | 17 | coating dissolved completely |

[1] PA = polyacrylic acid.
[2] Wt. polymer is determined from the initial wt. of film plus Mylar minus the weight of Mylar after all the film is washed off.
[3] pH of soil is ~ 6.

0 302 824

**0 302 824**

As shown above, 8 of the 14 sample coatings are completely dissolved, 3 samples have a trace of coating (a few thin spots of film) remaining and 3 samples are mostly intact. The samples that are mostly intact contain a component that is very water insoluble.

The following set of examples (16-23)are perforated under separate laboratory conditions from those previously described. The water solubilities ($S_w$) listed are determined by the turbidimetric method or the OECD method No. 105. Water solubilities are published in "the Pesticide Manual" 8th edition, published by the British Crop Protection Council (1987). Active ingredient release is determined by high pressure liquid chromatography (HPLC) or gas-liquid chromatography (GLC).

## Example 16

### Preparation of the Polymer System

16.1. 360 g of a 50% aqueous solution of a polyacrylic acid with a molecular weight (MW) of 5000 are diluted with 440 g water with vigorous stirring. 200 g ethoxylated nonylphenol with 9-10 ethylene oxide units are slowly stirred into this solution. The polymer solution obtained shows a solids content of 38%.

16.2. 360 g of a 50% aqueous solution of a polyacrylic acid with a MW of 5000 are diluted with 460 g water with vigorous stirring. 180 g ethoxylated nonylphenol with 5 ethylene oxide units are stirred slowly into this solution. The polymer solution obtained shows a solids content of 36%.

16.3. 360 g of a 50% aqueous polyacrylic acid a MW of 5000 are diluted with 460 g water with vigorous stirring. 180 g ethoxylated nonylphenol with 6 ethylene oxide units are slowly stirred into this solution. The polymer solution obtained shows a solids content of 36%.

16.4. 400 g of a 50% aqueous polyacrylic acid with a MW of 5000 are diluted with 400 g water with vigorous stirring. 200 g ethoxylated octylphenol with 7-8 ethylene oxide units are slowly stirred into this solution. The polymer solution obtained shows a solids content of 40%.

e following polymer solutions are prepared in a manner analogous to that described under 16.1-16.4:

28

| | 50% Aqueous Polyacrylic Acid | | Octylphenol O Nonphenol N | | | Water in g | Solids Content in % |
|---|---|---|---|---|---|---|---|
| | MW | Amount in g | Ethylene Oxide Units | | Amount in g | | |
| 16.5 | 5 000 | 400 | N | 6 | 200 | 400 | 40 |
| 16.6 | 5 000 | 534 | O | 7-8 | 133 | 333 | 40 |
| 16.7 | 5 000 | 534 | N | 6 | 133 | 333 | 40 |
| 16.8 | 50 000 | 400 | N | 5 | 200 | 400 | 40 |
| 16.9 | 50 000 | 266 | N | 5 | 267 | 467 | 40 |
| 16.10 | 50 000 | 500 | N | 5 | 125 | 375 | 37.5 |
| 16.11 | 5 000 | 400 | N | 5 | 200 | 400 | 40 |
| 16.12 | 5 000 | 266 | N | 5 | 270 | 536 | 40.3 |
| 16.13 | 5 000 | 534 | N | 5 | 133 | 333 | 40 |
| 16.14 | 5 000 | 374 | N | 9-10 | 187 | 561 | 37.4 |
| 16.15 | 5 000 | 250 | N | 9-10 | 250 | 500 | 37.5 |
| 16.16 | 5 000 | 500 | N | 9-10 | 125 | 375 | 37.5 |
| 16.17 | 100 000 | 192 | N | 5 | 192 | 616 | 28.8 |
| 16.18 | 50 000 | 184 | N | 5 | 183 | 633 | 27.5 |
| 16.19 | 5 000 | 268 | N | 5 | 268 | 464 | 40.2 |
| 16.20 | 150 000 | 170 | N | 5 | 170 | 660 | 25.5 |
| 16.21 | 50 000 } 250 000 | 178 } 102 | N } N | 9-10 } 5 | 80 } 101 | } 539 | 32.1 |
| 16.22 | 50 000 | 320 | N | 5 | 160 | 520 | 32 |
| 16.23 | 5 000 | 666 | N | 9-10 | 333 | 1 | 66.6 |
| 16.24 | 100 000 | 620 | N | 5 | 310 | 70 | 62 |
| 16.25 | 50 000 | 412 | N | 5 | 206 | 382 | 41.2 |
| 16.26 | 40 000 | 402 | N | 5 | 201 | 397 | 40.2 |
| 16.27 | 30 000 | 408 | N | 5 | 204 | 388 | 40.8 |

## Example 17

### Coating of Maize Kernels

17.1. 50 g of the polymer solution prepared under 16.1 are diluted with 40 g water to a solids content of ca. 20%. This solution is put into a stock vessel for liquids which is connected to a pneumatic spray nozzle. 80 g inert filler consisting of gypsum, wood flour and kaolin in a ratio of 4:3:1 are mixed in a mixing drum and put in a stock vessel for solids that is connected to a shaking trough. 1 kg seed maize is placed on a granulating plate that is set rotating and simultaneously sprayed with the polymer solution and dusted with the filler. After coating is ended the treated seed is air-dried for ca. 12 hours.

The amount of active substance is 5 g. If it is a liquid active substance, it is dissolved in 5 g acetone and mixed with the undiluted polymer solution; if it is a solid active substance, it is put into the mixing drum with the filler.

The active substances used are: furathiocarb, diazinon, isazofos, captan and furalaxyl.

17.2 50 g of the polymer solution prepared under 16.1 are diluted with 40 g water to a solids content of ca. 20%. This solution is put in a stock vessel for liquids which is connected to a pneumatic spray nozzle. 80 g inert filler consisting of gypsum, wood flour and bentonite in a ratio of 4:3:1 are mixed in a mixing drum and put in a stock vessel for solids that is connected to a shaking trough. 1 kg seed maize is placed on a granulating plate that is set rotating and simultaneously sprayed with the polymer solution and dusted with the filler. After coating is ended the treated seed is air-dried for ca. 12 hours.

The amount of active substance is 5 g. If it is a liquid active substance, it is dissolved in 5 g acetone and mixed with the undiluted polymer solution; if it is a solid active substance, it is put into the mixing drum with the filler.

The active substances used are: furathiocarb, terbufos, and isazofos.

## Example 18

### Coating of Maize Kernels with Standard Polymers

18.1. 20 g Vinnapas D50® (a 50% aqueous dispersion of polyvinyl acetate) are mixed, with vigorous stirring, with a solution of 3.5 g polyvinyl alcohol I (viscosity 13, saponification number 20) and 3.5 g polyvinyl alcohol II (viscosity 13, saponification number 140) in 63 g water. With this polymer solution (ca. 20% solids content) 1 kg seed maize is coated as described under 17.1 and 17.2, in which process 75 g of a mixture of wood flour and talc in a ratio of 2:1 is used as filler and liquid active substances are dissolved in methanol.

18.2. 20 g Vinnapas D50® are mixed, with vigorous stirring, with a solution of 3 g polyvinyl alcohol I (viscosity 13, saponification number 20) and 3 g polyvinyl alcohol II (viscosity 13, saponification number 140) in 54 g water. With this polymer solution (20% solids content) 1 kg seed maize is coated as described under 17.1 and 17.2, in which process 75 g of a mixture of wood flour, gypsum and talc in a ratio of 2:2:1 is used as filler and liquid active substances are dissolved in methanol.

## Example 19

### Effect of the Polymer System on the Release of Active Substance from Coated Seed

19.1. Release of Active Substance in Water

10 g maize kernels coated according to 17.1 and 18.1 are each put in a vessel that contains 200 ml water and stirred at 20°C and 50 rpm. After 2 and 4 hours 100 ml liquid are removed from each vessel and replaced by pure water. The water samples removed are tested for their active substance content.

| Active Substance | $S_W$ in ppm | Released Active Substance in %<br>After 4 Hours | |
|---|---|---|---|
| | | Standard Polymer<br>18.1 | Association Polymer<br>17.1 |
| captan | 3.3 | 5.6 | 40.6 |
| furathiocarb | 10 | 10.6 | 45.7 |
| diazinon | 60 | 39.2 | 69.1 |
| isazofos | 150 | 63.5 | 80.8 |
| furalaxyl | 230 | 80.1 | 84.9 |

$S_W$ = solubility in water

As shown above, the presence of the association polymer increases the release rate of the active ingredient.

19.2. Release of Active Substance in the Soil

For leaching experiments the same type of association polymer as described in example 16.1 is used. 1 kg of corn is coated with 82.5 g of a binding agent containing 80 g of assocation polymer (solid content 25%) and 2.5 g of Vinnapas MV 70N, a vinylacetate/maleate copolymer (Wacker-Chemie GmbH). As carrier material 75 g of a mixture of gypsum/wood powder/bentonite 45/35/12 is applied.

"Traditional" coats produced as comparative samples contain the same polymers in the binding agent as described in example 18.2. To coat 1 kg of corn the solution contains 20 g of Vinnapas D50 and 60 g of an aqueous solution of 3 g Polyviol M 13/20 and 3 g Polyviol M 13/140 dissolved in 54 g of water. The carrier material for these coats is 75 g of a mixture of wood powder/gypsum/talcum 2/2/1.

For the determination of the influence of association polymers on the distribution of agricultural chemicals in the soil, the coated corn samples contain 5 g/kg of one of the following active ingredients: furathiocarb, terbufos or isazofos, respectively.

The leaching behavior is tested in a glass column (inner diameter 5 cm, length 14 cm) which is filled with 6 cm of sand. After saturation of the sand with water, 3 coated corn kernels are placed on the surface and covered with 4 cm of sand. After the application of 50 mm of artificial rainfall in 48 hours the amount of active ingredient in the leachate, the kernels and the sand layer below the kernels is analyzed.

Results

| Active Ingredient | % a.i. Analyzed in | | | | | |
|---|---|---|---|---|---|---|
| | "Traditional" Coats | | | Association Polymer | | |
| | Kernels | Sand | Leachate | Kernels | Sand | Leachate |
| furathiocarb | 98.4 | < 0.5 | < 0.5 | 59.2 | 23.7 | < 0.5 |
| terbufos | 90.6 | 3.9 | < 0.5 | 63.3 | 34.0 | < 0.5 |
| isazofos | 68.2 | 22.9 | < 0.5 | 30.1 | 39.7 | 34.9 |

As shown above, the presence of the association polymer increases the amount of active ingredient found in the sand and water away from the kernels.

The following set of biological examples (20-23) demonstrate the use of the association polymer system as prepared in a similar manner to that in example 16.1.

## Example 20

The effect of polymer system on the activity of seed applied insecticides to control larvae of the banded cucumber beetle.

### Method

Plastic pots, 1 litre volume, are filled with soil to within 3 cm of the top. Three soil types are used:

1. A natural soil from Stein, Canton Aargau, Switzerland. This is heat sterilized and sieved to give an agglomerate size of less than 5 mm. Its composition is clay 20.7%, silt 13.7%, sand 65.6%, organic matter 3.2%, pH 5.6. Moisture is adjusted to 20% of dry weight.

2. An artificial mixture of fine quartz sand and milled neutralized peat (2% of total by dry weight). The moisture is adjusted to 10% of dry weight.

3. An artificial mixture similar to (2) except that the neutralized peat comprised 6% by dry weight. Moisture is adjusted to 20% for the mixture.

Seeds of the maize hybrid G 4733 are treated with insecticide using techniques described earlier. Active ingredients are furathiocarb, terbufos, isofenphos and fonofos. 10 g of each is applied to 1 kg of maize seed using either a PVAc/PVAl (i.e. polyvinyl acetate/polyvinyl alcohol) or an association polymer system as binder.

One seed is sown 3 cm deep in the center of each of 10 pots per treatment. The pots are placed in a growth chamber with a relative humidity of 70% in a 12 hour daylength, light intensity 30,000 lux, using 26°C day and 22°C night temperatures. Soil moisture is maintained at the original level by daily irrigation with a commercially available nutrient solution.

After two or three weeks of plant growth, 40 larvae of the banded cucumber beetle (Diabrotica balteata) are scattered on the surface of each pot. This insect species is commonly used as a laboratory model for the corn rootworm (Diabrotica spp.) which is a common soil insect pest of maize (Zea mays) in the USA. For this test, second instar larvae are selected. They are reared on maize seedlings at 23°C for 13 days from egglaying. The surface of the soil in the pots is disturbed and 40 larvae are scattered on the surface. The disturbance encourages burrowing of the larvae.

The insects are allowed to feed on the plant roots for one week before the contents of each pot are separated into three components (roots, insects and soil) using a wet sieving technique. Living larvae are then counted and damage assessed on crown roots growing from the stem-base using the 0-6 scale shown below:

0 = no damage
1 = slight feeding damage, no roots eaten through

2 = more than 3 places with feed damage, no roots eaten through
3 = 1-2 roots eaten through
4 = more than 2, but less than half the roots eaten
5 = more than half the roots eaten, but at least 3 still connect stem and soil
6 = less than 3 roots connect stem to soil

## Results

Insecticides in the association polymer formulations give generally better insect control than in the PVAc/PVAl polymer system. The improvement is particularly evident in the damage scores (Table 1). The degree of the improvement is dependant upon the active ingredient, the soil type and the duration of the experiment. With one exception (furathiocarb in Stein earth three weeks after planting), the improvement is consistent across all tests. The improvement in larval mortality (Table 2) is clearest when control by the PVAc/PVAl system is particularly poor e.g. for isofenphos. However, whenever the larval survival from the PVAc/PVAl system is greater than 3% there is a consistent advantage from using the association polymer.

| Insecticide | Polymer | Soil Type | | | | | |
|---|---|---|---|---|---|---|---|
| | | Stein Earth | | 98% Sand | | 94% Sand | |
| | | Plant Age | | Plant Age | | Plant Age | |
| | | 3 w | 4 w | 3 w | 4w | 3 w | 4 w |
| furathiocarb | PVAc/PVAl | 2.0 | 3.0 | 3.6 | 4.0 | 4.2 | 4.0 |
| | Association Polymer | 2.6 | 1.4 | 1.0 | 1.2 | 2.4 | 2.6 |
| terbufos | PVAc/PVAl | 2.6 | 3.3 | 1.6 | 1.4 | 3.0 | 2.8 |
| | Association Polymer | 1.8 | 2.2 | 0.8 | 0.5 | 1.4 | 1.2 |
| isofenphos | PVAc/PVAl | 5.3 | 4.0 | 4.0 | 4.6 | 5.0 | 4.0 |
| | Association Polymer | 3.0 | 3.0 | 3.3 | 2.5 | 2.5 | 3.3 |
| fonofos | PVAc/PVAl | 3.6 | 3.8 | 3.2 | 2.5 | 4.3 | 2.8 |
| | Association Polymer | 3.0 | 2.6 | 2.0 | 1.0 | 1.4 | 3.2 |
| Untreated Check | | 5.5 | 5.0 | 5.3 | 4.4 | 6.0 | 4.3 |

Table 1: Scores of damage caused by D. balteata larvae on 3 or 4 week old maize plants grown from seed treated with insecticide/polymer combinations.

| Insecticide | Polymer | Soil Type | | | | | |
|---|---|---|---|---|---|---|---|
| | | Stein Earth | | 98% Sand | | 94% Sand | |
| | | Plant Age | | Plant Age | | Plant Age | |
| | | 3 w | 4 w | 3 w | 4w | 3 w | 4 w |
| furathiocarb | PVAc/PVAl | 1 | 5 | 1 | 24 | 8 | 55 |
| | Association Polymer | 3 | 0 | 0 | 3 | 0 | 29 |
| terbufos | PVAc/PVAl | 1 | 3 | 1 | 1 | 0 | 5 |
| | Association Polymer | 2 | 2 | 0 | 1 | 0 | 4 |
| isofenphos | PVAc/PVAl | 11 | 16 | 11 | 36 | 13 | 43 |
| | Association Polymer | 1 | 5 | 0 | 6 | 2 | 20 |
| fonofos | PVAc/PVAl | 6 | 5 | 1 | 2 | 3 | 18 |
| | Association Polymer | 3 | 0 | 0 | 4 | 2 | 12 |
| Untreated Check | | 15 | 48 | 69 | 61 | 59 | 77 |

Table 1: Percent survival of D. balteata larvae on 3 or 4 week old maize plants grown from seed treated with insecticide/polymer combinations.

## Example 21

The effect of polymer system on the soil activity of furathiocarb applied at several rates on two maize cultivars.

### Method

This example includes the results of test series using 2 maize cultivars Centaurus and Arjuna. The basic test procedure is described in detail under example 20 therefore only differences are mentioned here.

Seeds of the hybrid Centaurus are treated with 4 or 10 g/kg furathiocarb in either PVAc/PVAl or association polymer systems. The cultivar Arjuna is treated with 2.5 or 10 g/kg seed in the same polymer systems. The seeds are sown in two soil types, either a natural soil from Stein, Canton Aargau, Switzerland or in a 98% sand 2% peat mixture. Both these soil types are described previously.

### Results

The association polymer formulations give better insect control than the PVAc/PVAl formulations in the 98:2 sand:peat mixture. This can be seen for both maize genotypes, for both observation times and for all the dosages tested (Tables 1-4). However, it can also be seen from these tables that there is a considerable effect of soil type. In the earth from Stein, differences between polymer systems are less clear. There appears to be little difference between association polymer and PVAc/PVAl for hybrid Centaurus in the Stein earth (Table 1 and 2). However, for the cultivar Arjuna there is a consistent improvement in insecticide performance in this natural soil-type at the 10 g rate (Tables 3 and 4).

It can therefore be concluded that the association polymer system can enhance insecticide activity, but the level of improvement is dependent on soil type, plant genotype and dosage of active ingredient.

| Soil Type | Plant Age | Formulation | | | | Check |
| | | PVAc/PVAl | | Association Polymer | | |
| | | Dosage | | Dosage | | |
| | | 4 g | 10 g | 4 g | 10 g | |
| Stein Earth | 3 w | 2.1 | 1.0 | 0.8 | 1.0 | 6.0 |
| | 4 w | 1.8 | 2.2 | 2.1 | 1.9 | 4.0 |
| 98% Sand | 3 w | 3.0 | 1.8 | 1.4 | 0 | 5.8 |
| | 4 w | 3.4 | 3.6 | 1.6 | 1.2 | 4.8 |

Table 1: Scores of damage at 3 and 4 weeks after planting caused by D. balteata on the hybrid Centaurus grown from seed treatment with furathiocarb.

| Soil Type | Plant Age | Formulation | | | | Check |
|---|---|---|---|---|---|---|
| | | PVAc/PVAl | | Association Polymer | | |
| | | Dosage | | Dosage | | |
| | | 4 g | 10 g | 4 g | 10 g | |
| Stein Earth | 3 w | 1 | 1 | 0 | 1 | 52 |
| | 4 w | 4 | 10 | 4 | 7 | 52 |
| 98% Sand | 3 w | 17 | 8 | 2 | 4 | 56 |
| | 4 w | 36 | 30 | 8 | 8 | 57 |

Table 2: Percent D. balteata survival at 3 and 4 weeks after sowing for the hybrid Centaurus grown from seed treated with furathiocarb.

| Soil Type | Plant Age | Formulation | | | | Check |
|---|---|---|---|---|---|---|
| | | PVAc/PVA1 | | Association Polymer | | |
| | | Dosage | | Dosage | | |
| | | 2.5 g | 10 g | 2.5 g | 10 g | |
| Stein Earth | 3 w | 3.2 | 3.0 | 3.6 | 1.8 | 6.0 |
| | 4 w | 3.0 | 3.4 | 3.8 | 2.3 | 4.7 |
| 98% Sand | 3 w | 3.0 | 2.8 | 1.4 | 1.2 | 5.7 |
| | 4 w | 3.4 | 3.2 | 2.8 | 0.6 | 4.0 |

Table 3: Scores of damage at 3 and 4 weeks after planting caused by D. balteata on the cultivar Arjuna grown  from seed treated with

furathiocarb.

| Soil Type | Plant Age | Formulation | | | | Check |
| --- | --- | --- | --- | --- | --- | --- |
| | | PVAc/PVAl | | Association Polymer | | |
| | | Dosage | | Dosage | | |
| | | 2.5 g | 10 g | 2.5 g | 10 g | |
| Stein Earth | 3 w | 5 | 3· | 1 | 1 | 26 |
| | 4 w | 11 | 14 | 17 | 0 | 41 |
| 98% Sand | 3 w | 20 | 20 | 5 | 8 | 56 |
| | 4 w | 39 | 21 | 17 | 0 | 43 |

Table 4: Percent D. balteata survival at 3 and 4 weeks after sowing for the cultivar Arjuna grown from seed treated with furathiocarb.

Example 22

The effect of polymer system on the systemic activity of seed applied furathiocarb.

Method

This example includes the results of three test series using different maize cultivars F7 x F2, Centaurus and Arjuna. The basic experimental procedure is that used in example 20 therefore only differences are mentioned here.

Seeds of the hybrid F7 x F2 are treated with 10 g/kg furathiocarb in either PVAc/PVAl or association polymer systems. Treatment techniques are described earlier. Seeds are sown in 4 soil types: 100% quartz sand, 98% quartz sand plus 2% peat, 95% quartz sand plus 5% peat and 90% quartz sand plus 10% peat. Soil moisture is maintained at 10% for the 100% and 98% sand mixtures and at 20% for the other two soil types. All percentages are based on dry weight.

Insecticidal activity is tested by caging 5 first instar Heliothis virescens larvae on each leaf of the maize plants. The insects are caged on the leaves at 9 and 14 days after planting and are allowed to feed for 5 and 3 days respectively. The test is evaluated by counting surviving larvae and by visually assessing feeding damage. To achieve this consistently, the leaf is compared to standard diagrams and the percentage eaten is estimated as 0, 1, 2, 5, 10, 20 or 50% or the total area. These percentages are converted to a linear 0-6 rating to give the damage scores shown in the tables of results.

Seeds of the hybrid Centaurus are treated with both 4 and 10 g/kg furathiocarb in either PVAc/PVAl or association polymer systems. Seeds are sown in two soil types either earth from Stein, Canton Aargau, Switzerland (exact description given earlier) or in a 98% sand 2% peat mixture. Moisture content is 20% of dry weight for the former and 10% for the latter. H. virescens is again used to test insecticidal activity. The larvae are caged on the leaves either 8 or 14 days after planting and are allowed to feed for 4 days.

Seeds of the cultivar Arjuna are treated with 2.5 and 10 g/kg furathiocarb in either PVAc/PVAl or association polymer systems. Seeds are sown in the two soil types used in the tests of the hybrid Centaurus. H. virescens is again the test insect and the larvae are caged on individual leaves 10 and 14 days after planting; they are allowed to feed for 4 days. Only 10 g rates are tested at the second date.

Results

The levels of H. virescens control achieved by seed-applied furathiocarb are generally improved by the use of the association polymer system. This can be seen from both the estimates of percent larval survival and from the damage scores. The degree of the improvement is dependant on plant age, application rate and soil type. There are particular situations when no improvement is found. These are exceptions due to particularly unfavorable combinations of dosage and soil-type.

| Soil Type | Time (weeks) | Formulation | | |
|-----------|--------------|-------------|---------------------|-------|
|           |              | PVAc/PVA1   | Association Polymer | Check |
| 100% Sand | 1            | 5.1         | 3.5                 | 6.8   |
|           | 2            | 3.6         | 4.0                 | 5.3   |
| 98% Sand  | 1            | 6.5         | 4.2                 | 7.0   |
|           | 2            | 5.2         | 3.7                 | 5.3   |
| 95% Sand  | 1            | 6.4         | 3.2                 | 7.0   |
|           | 2            | 4.8         | 4.4                 | 5.8   |
| 90% Sand  | 1            | 6.0         | 4.9                 | 7.0   |
|           | 2            | 4.9         | 4.2                 | 6.5   |

Table 1: Scores of damage caused by H. virescens larvae on the hybrid F7 x F2 grown from seed treated with 10 g/kg furathiocarb.

| Soil Type | Time (weeks) | Formulation | | Check |
|---|---|---|---|---|
| | | PVAc/PVAl | Association Polymer | |
| 100% Sand | 1 | 40 | 18 | 70 |
| | 2 | 42 | 45 | 70 |
| 98% Sand | 1 | 36 | 16 | 60 |
| | 2 | 75 | 37 | 65 |
| 95% Sand | 1 | 48 | 16 | 65 |
| | 2 | 64 | 50 | 75 |
| 90% Sand | 1 | 48 | 34 | 65 |
| | 2 | 61 | 42 | 95 |

Table 2: Percent survival of H. virescens larvae on the hybrid F7 x F2 grown from seed treated with 10 g/kg furathiocarb.

| Soil Type | Time (weeks) | Formulation | | | | Check |
|---|---|---|---|---|---|---|
| | | PVAc/PVA1 Dosage | | Association Polymer Dosage | | |
| | | 4 g | 10 g | 4 g | 10 g | |
| Stein Earth | 1 | 2.8 | 2.0 | 1.9 | 2.0 | 5.5 |
| | 2 | 3.9 | 3.4 | 4.4 | 3.0 | 6.2 |
| 98% Sand | 1 | 1.9 | 2.0 | 1.5 | 1.3 | 5.4 |
| | 2 | 5.5 | 5.8 | 4.1 | 2.8 | 6.8 |

Table 3: Scores of damage caused by H. virescens larvae on the hybrid Centaurus grown from seed treated with 4 and 10 g/kg furathiocarb.

| Soil Type | Time (weeks) | Formulation | | | | Check |
|---|---|---|---|---|---|---|
| | | PVAc/PVA1 Dosage | | Association Polymer Dosage | | |
| | | 4 g | 10 g | 4 g | 10 g | |
| Stein Earth | 1 | 25 | 10 | 7 | 10 | 77 |
| | 2 | 32 | 27 | 49 | 22 | 81 |
| 98% Sand | 1 | 8 | 12 | 2 | 0 | 74 |
| | 2 | 46 | 51 | 31 | 13 | 67 |

Table 4:  Percent survival of H. virescens larvae on the hybrid Centaurus grown from seed treated with 4 and 10 g/kg furathiocarb.

| Soil Type | Time (weeks) | Formulation | | | | Check |
|---|---|---|---|---|---|---|
| | | PVAc/PVAl | | Association Polymer | | |
| | | Dosage | | Dosage | | |
| | | 2.5 g | 10 g | 2.5 g | 10 g | |
| Stein Earth | 1 | 3.3 | 2.1 | 3.3 | 1.8 | 6.5 |
| | 2 | - | 3.5 | - | 2.7 | 6.4 |
| 98% Sand | 1 | 4.9 | 3.4 | 2.1 | 2.5 | 6.0 |
| | 2 | - | 4.7 | - | 2.7 | 6.5 |

Table 3:  Scores of damage caused by H. virescens larvae on the cultivar Arjuna grown from seed treated with 2.5 and 10 g/kg furathiocarb.

| Soil Type | Time (weeks) | Formulation | | | | Check |
|---|---|---|---|---|---|---|
| | | PVAc/PVAl | | Association Polymer | | |
| | | Dosage | | Dosage | | |
| | | 2.5 g | 10 g | 2.5 g | 10 g | |
| Stein Earth | 1 | 22 | 8 | 30 | 2 | 60 |
| | 2 | - | 21 | - | 9 | 54 |
| 98% Sand | 1 | 50 | 28 | 4 | 6 | 57 |
| | 2 | - | 37 | - | 8 | 64 |

Table 4: Percent survival of H. virescens larvae on the cultivar Arjuna grown from seed treated with 2.5 and 10 g/kg furathiocarb.

## Example 23

The control of corn rootworms in the field using insecticide/polymer combinations applied to the seed.

Method

Seeds of the maize hybrid G 4733 are treated with insecticides using techniques described earlier. Two insecticides, furathiocarb and terbufos are applied to the seeds in two polymer systems either PVAc/PVAl or association polymer. The active ingredients are applied at 10 g/kg seed in both polymer systems and at a 30 g/kg rate in the PVAc/PVAl combination.

Seeds are sown in a randomized complete block design with 4 replicates. Three check treatments are included as well as the seed systems. There are two granule checks comprising terbufos and furathiocarb applied at rates of 0.11 g m$^{-1}$ row and also an untreated check. Plots are 10 m long and consist of one row of plants. Root damage is scored 63 days after planting using the 0-6 scale which is standard among research workers in the USA. Five roots are dug from each plot, washed and examined for root damage.

Results

Terbufos in the association polymer system gives the best rootworm control of all seed treatments. The control is not quite as good as the terbufos granule, but is better than the furathiocarb granule. The use of the association polymer binder does not improve activity of the furathiocarb seed treatments.

| Insecticide | Formulation | | | |
|---|---|---|---|---|
| | PVAc/PVA1 | Association Polymer | | Granule |
| | Dosage | Dosage | | |
| | 10 g/kg   30 g/kg | 10 g/kg | | $0.1 \text{ g m}^{-1}$ |
| terbufos | 3.1      2.8 | 2.6 | | 2.2 |
| furathiocarb | 4.1      4.8 | 4.5 | | 3.2 |

Table 1:  Ratings for corn rootworm damage.  The untreated check gives a score of 5.8.

**Claims**

1. A method for the moisture activated release and transport in soil of a substantially non-volatile, lipophilic biologically active agent having a solubility in water of less than about 0.1% by weight, comprising contacting said soil with a composition containing a biologically effective amount of said active agent entrapped within an association complex of a polycarboxylate polymer and a poly (lower) alkoxylated surfactant, such that upon application of moisture the rate of release and transport of said active agent from said composition is dependent upon (i) the rate of moisture activated dissociation of, and resultant release of said surfactant from, the complex, and (ii) the rate of diffusion of the released surfactant through the moist soil.

2. A method according to claim 1, wherein the active agent has a solubility in water of between about 1,000 and about 0.1 parts per million by weight.

3. A method according to claim 2, wherein the active agent has a solubility in water of between about 500 and about 1 part per million by weight.

4. A method according to claim 1, where the active agent is a biocide.

5. A method according to claim 1, where the active agent is a pesticide or fungicide.

6. A method according to claim 1, wherein the apparent solubility of the active agent in an aqueous solution of said poly (lower) alkoxylated surfactant having a surfactant concentration greater than the critical micelle concentration of such surfactant is at least about 50% greater than in water.

7. A method according to claim 1, in which the composition is a granulate or bead.

8. A method according to claim 2, in which the composition is in the form of a coated seed.

9. A method according to claim 8, in which the active agent is in the form of a biocide.

10. A method according to claim 8, in which the active agent is a pesticide or fungicide.

11. A moisture activated composition for the release and transport in soil of a substantially non-volatile lipophilic biologically active substance having a solubility in water of less than about 0.1% by weight, said composition comprising a biologically effective amount of said active agent entrapped within an association complex of a polycarboxylate polymer and a poly (lower) alkoxylated surfactant, such that upon application of moisture, the rate of release and transport of said active agent from said composition is dependent upon (i) the rate of moisture activated dissociation of, and resultant release of said surfactant from, the complex, and (ii) the rate of diffusion of the released surfactant through the moist soil.

12. A composition according to claim 11, wherein the active agent has a solubility in water of between about 1,000 and about 0.1 parts per million by weight.

13. A composition according to claim 11, wherein the active agent has a solubility in water of between

45

about 500 and about 1 part per million by weight.

14. A composition according to claim 11, where the active agent is a biocide.

15. A composition according to claim 11, where the active agent is a pesticide or fungicide.

16. A composition according to claim 11, wherein the apparent solubility of the active agent in an aqueous solution of said poly (lower) alkoxylated surfactant having a surfactant concentration greater than the critical micelle concentration of such surfactant is at least about 50% greater than in water.

17. A composition according to claim 11, in which the composition is a granulate or bead.

18. A composition according to claim 11, in which the composition is in the form of a coated seed.

19. A composition according to claim 11, in which the active agent is in the form of a biocide.

20. A composition according to claim 11, in which the active agent is a pesticide or fungicide.